# EUROPEAN PATENT SPECIFICATION

(11) **EP 1 954 971 B1**
(45) Date of publication and mention of the grant of the patent: **06.01.2016**
(21) Application number: 06812817.2
(22) Date of filing: 10.11.2006
(51) Int. Cl.: F16L 55/07, F16L 59/00, F16L 5/04

(54) **PLUG AND METHOD FOR DRAINING AWAY FLUID FROM AN INSULATING MATERIAL**
STOPFEN UND VERFAHREN ZUM ABLASSEN EINES FLUIDS AUS EINEM ISOLIERMATERIAL
BOUCHON ET PROCÉDÉ DE DRAINAGE DE FLUIDE D UN MATÉRIAU ISOLANT

(30) Priority: 24.11.2005 NO 20055559
(43) Date of publication of application: 13.08.2008
(73) Proprietor: Norisol Norge AS, 4097 Sola (NO)
(72) Inventor: REIGSTAD, Johnny, N-4018 Stavanger (NO)
(74) Representative: Håmsø Patentbyrå ANS
(86) International application number: PCT/NO2006/000403
(87) International publication number: WO 2007/061311

(56) References cited:
- WO-A1-99/10678
- WO-A1-99/10678
- US-A- 4 534 119
- US-A- 4 534 119
- US-A- 5 520 009
- US-A- 5 520 009
- US-A- 5 953 872
- US-A1- 2003 101 668

## Description

The present invention relates to a plug for use in the draining of a fluid. More particularly, it relates to a plug arranged to drain fluid which may form in insulation portions of elements such as, but not limited to, pipes and equipment in process plants.

In process plants it is often necessary, for technical, economic or environmental reasons, to insulate equipment such as pipelines, valves, pumps and containers from the surrounding environment. Normally there is a need for thermal insulation or fire insulation, but in some cases there is also a need for insulation against sound, for example. In this document fire insulation will largely be discussed. However, it will be understood that the invention is also relevant for other insulation purposes. Similarly, and even though the insulation of equipment in process plants is discussed in what follows, the invention is relevant to all types of insulated equipment in which a fluid could condense in a portion between the external mantle surface of the equipment and the external surface of the outside insulating material of the equipment.

In process plants, for example, fluid is carried and stored in pipe and containers, and the fluid may have a temperature which is substantially different from the ambient temperature of the pipe or container. For reasons of processing, economy or safety, among others, there may therefore be a need for insulating for example a pipe or a container with one or more layers of insulation. Multiple layers of insulation are particularly relevant where there is a need for insulation layers having different properties and being specially developed for use in, for example, thermal insulation or fire insulation. To protect the often brittle insulation from the external environment it is common practice to place an outer casing or mantle of a solid material, such as metal, externally on the outer insulation layer.

Because of the temperature gradient across the insulation material it is likely that a fluid in a gaseous state, such as air, could reach its point of vapour saturation in the insulating material and thereby condense. Such condensation has at least three unfortunate consequences. Firstly, damp insulation could reduce the insulating properties to a substantial degree. Secondly, moisture in the insulating material could represent considerable weight which would have to be carried by the equipment and its foundation. Thirdly, moisture in the insulating material could result in an increased risk of corrosion of the insulated equipment, which could in turn represent a safety risk in addition to increased maintenance costs. Therefore, there is a need for condensed fluid to be led away from insulating materials surrounding equipment.

A so-called draining nipple is known, for use in the draining of insulated pipes for example, the insulation being protected by means of an outer, metallic casing. The prior art draining nipple is arranged to penetrate substantially only the outer, metallic casing and lead condensed fluid out through the nipple. Thus, the insulating material located between the nipple and the equipment is untouched, which has been desirable for reasons of fire resistance.

However, there are several drawbacks related to the prior art mentioned above. Fluid condensing near the surface of the equipment will have to move through all the insulation present between the point of condensation and the draining nipple. As many insulating materials have relatively good moisture-absorbing or moisture-carrying properties, the insulating materials could contain a lot of moisture, which has, among other things, the negative consequences discussed above. Among other things in order not to damage the insulation, holes in the casing are drilled and the nipple is fitted to the casing before this is placed on the outside of the insulation. However, experience goes to show that this may often result in incorrect or unfavourable positioning of the nipple in relation to the particular requirements for positioning of draining points existing in some industry norms.

There is also known a plastic plug which is arranged to penetrate into a portion of an insulation to drain away liquid from inner portions of the insulation. A substantial drawback of the plastic plug is that it could not be used in connection with fire insulation and that the bore of the plastic plug provides an open portion in towards the equipment. Said opening is not acceptable when there is a requirement for fire insulation of equipment.

US 2003/0101668 discloses a wall lead-in for a feeder line and including an element formed of an expandable material and provided in an intermediate annular space between a through-opening formed in a wall and the feeder line, and a sleeve shaped form member having an outer diameter corresponding to a diameter of the through-opening, designed for surrounding the feeder line and arrangeable coaxially therewith, and formed of a form element made of a perforated strip material and having a predetermined length. The intermediate space between the through-openings and the feeder line is filled with an expandable and hardenable material.

US 5 953 872 discloses a barrier assembly for blocking the spread of fire and smoke through a building partition. The barrier assembly comprises an outer tube, an inner pipe and an intumescent material being provided in an annular space between said tube and said pipe. In the event of fire, the intumescent material will expand and fill said annular space, but not the inside of the inner pipe.

The invention has as its object to remedy or at least reduce one or more drawbacks of the prior art.

The object is achieved through features as specified in the description below and in the claims that follow.

In this document any positional specifications, such as "upper" and "lower", "bottom" and "top", "horizontal" and "vertical" or "left" and "right" refer to the position that the plug is in in the figures that follow, a position which will also be a natural one in a situation of use.

In one aspect the present invention is constituted by a plug adapted to drain a fluid away from at least one layer of insulating material encased between an equipment and an outer mantle, the plug being adapted to extend through a bore in a portion of the outer mantle and into a bore in each one of the at least one layer of insulating material, the plug comprising: a tubular body defined by a first end portion and a second end portion; a draining means adapted to drain fluid from the at least one layer of insulating material and/or equipment and out through the first end portion of the plug, wherein the plug further comprising an expandable heat insulating element arranged within a portion of the tubular body and adapted to expand under the influence of heat at a predetermined temperature from an unexpanded state allowing for fluid communication between the first end portion and the second end portion, to an expanded state for providing a seal between the first end portion and the second end portion of the plug. The tubular body could be of any cross-sectional shape, such as, but not limited to, circular, oval and cornered.

In order to provide the best possible fluid communication through the plug according to the present invention, the insulating material is removed in the portion occupied by the plug. Thus, in one embodiment, the inner portion of the tubular body of the plug is uninsulated. In areas of use, in which there is a requirement for fire protection of the equipment, and in which the equipment is completely or partially insulated because of this, there is therefore a need for being able to maintain the draining properties of the plug in a normal situation of operation, whereas in a fire situation there will be a need for providing thermal insulation also in the internal portion of the tubular portion of the plug.

In a preferred embodiment the tubular body surrounds at least a portion of an expandable element which is arranged to expand under the influence of heat at a predetermined temperature. After expansion of the expandable element, thermal conduction through the tubular body of the plug is reduced.

In a preferred embodiment the draining means is constituted by at least one perforation in the tubular body. Thus, in addition to providing the possibility of fluid communication between the second end portion, which preferably faces the external surface of the equipment, and the first end portion, which is preferably at the outer mantle, said at least one perforation provides a possibility for fluid communication between the insulating material and out through the first end portion. In a preferred embodiment the tubular body is provided with a plurality of perforations. In one embodiment at least one portion of the tubular body is produced from a mesh-like material.

There is also provided a method of draining away a fluid from at least one layer of insulating material which is substantially enclosed between a piece of equipment and an outer mantle, the insulating material being arranged to protect the equipment from harmful thermal influence of, for example, an external fire, wherein a plug which is formed of a tubular body with a first end portion and a second end portion, extends through a bore in a portion of the outer mantle into a bore in each one of the at least one layer of insulating material, and at least one portion of the plug is provided with a draining means which is arranged to drain fluid from the at least one layer of insulating material out through the first end portion of the plug, and an expandable element is placed in a portion of the tubular body of the plug, the expandable element being arranged to expand under the influence of heat of a predetermined temperature, whereby thermal conduction through the tubular body of the plug is reduced. The draining means is preferably constituted by at least one perforation in the tubular body. In those cases in which the expandable element is formed as a sleeve, it is preferably provided with at least one perforation which is aligned with the perforation(s) of the tubular body of the plug.

In what follows there is described a non-limiting exemplary embodiment of a preferred embodiment which is visualized in the accompanying drawings, in which like or corresponding parts are indicated by the same reference numeral, and in which:
Figure 1 shows a side view of a plug which is formed of a tubular body with a lower first end portion and an upper second end portion, the tubular body being provided with bores;
Figure 2 shows the plug of figure 1, but where, additionally, the tubular body of the plug is provided with a thermally expanding sleeve body on its inside;
Figure 3 shows on a larger scale the plug of figure 2 in a top view through A-A of figure 2;
Figure 4 shows the plug of figure 3 in an alternative embodiment; and
Figure 5 shows, on a smaller scale and partly in section, the plug of figure 2 after it has been placed substantially perpendicularly to a lower portion of a pipe which is insulated by two layers of insulation, which in turn are protected by means of an outer mantle.

In the figures the reference numeral 1 identifies a plug which is formed by a tubular body 3 of a substantially circular cross-section, and which is defined by a flange 4 in a lower or first portion 5 and by an end surface in an upper or second portion 7. The tubular body 3 is provided with bores 9.

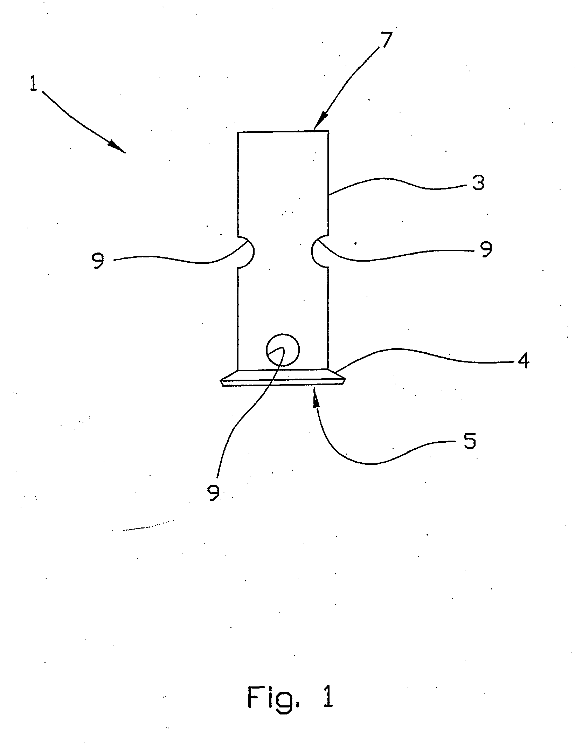

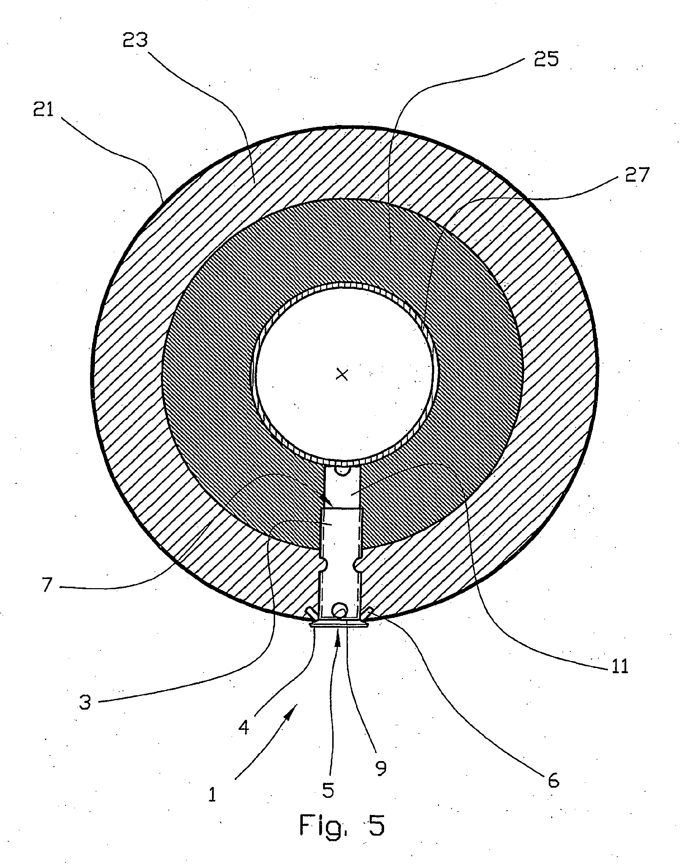

In figure 1 the plug 1 is shown in a side view. The flange 4 or collar of the plug 1 projects a distance from the external surface of the tubular body 3. The purpose of the flange 4 is, among other things, to provide an abutment against a portion of a mantle 21 (see figure 5) surrounding a cut-out, through which the tubular body 3 of the plug 1 has been passed.

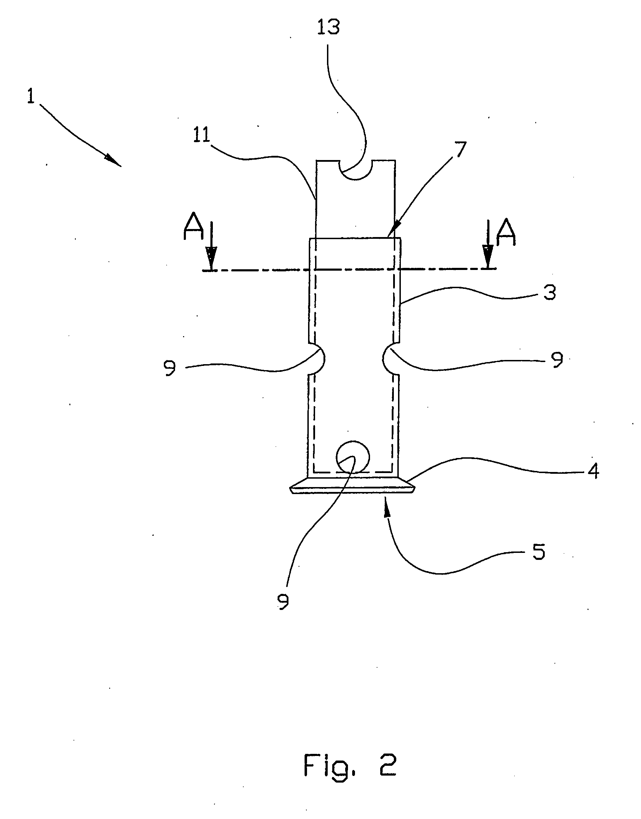

In figure 2 a portion of a substantially tubular, expandable sleeve body 11 is placed inside the tubular body 3 of the plug 1. In a projecting end portion the expandable sleeve body 11 is provided with a cut-out 13. The purpose of the cut-out 13 is to provide a possibility of fluid communication between the external and internal surfaces of the sleeve body 11 in those cases in which the end portion of the sleeve body 11 has been brought into abutment on a piece of equipment, whereby fluid communication between the end surface of the expandable body 11 and the insulation is blocked.

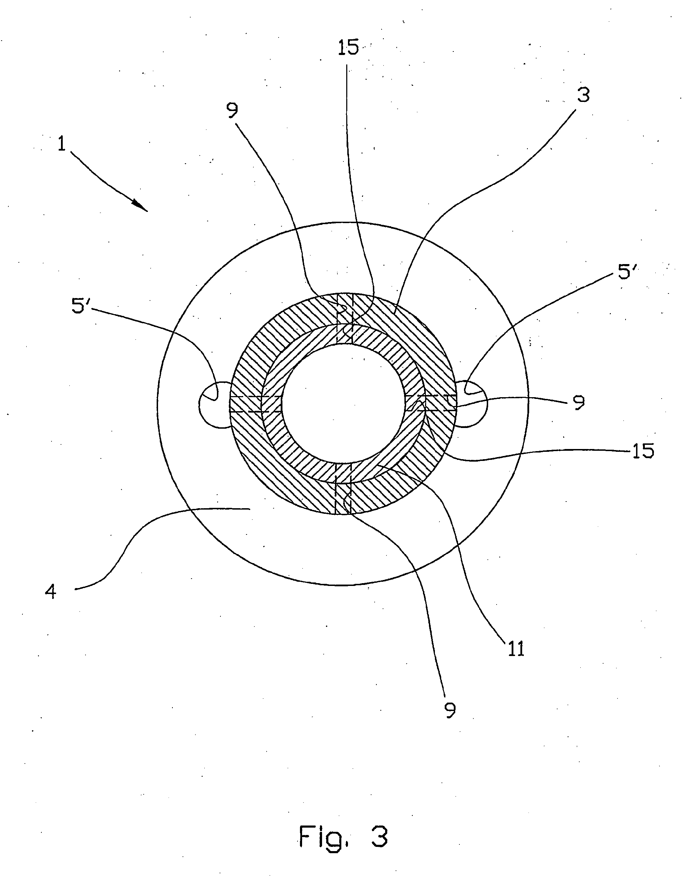

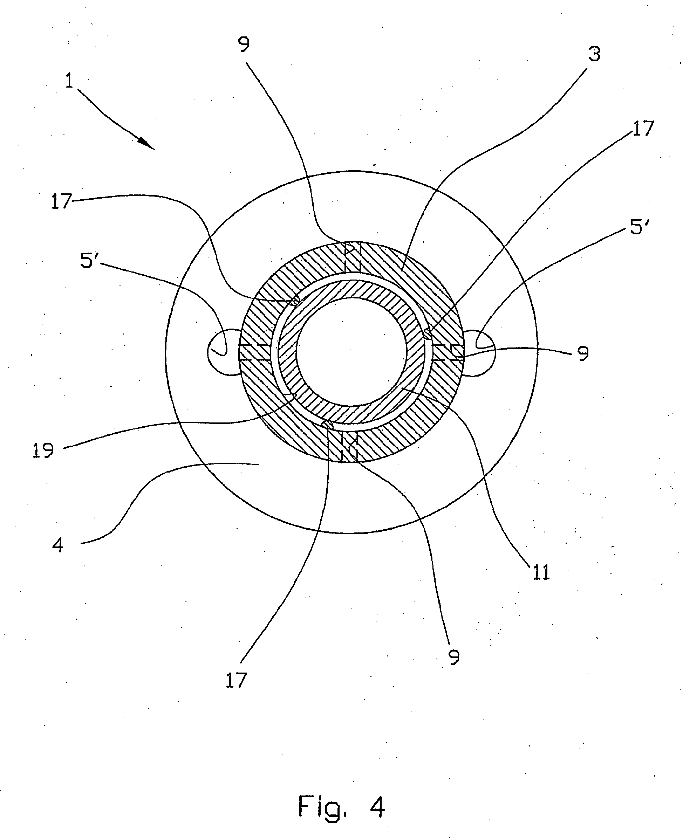

The figures 3 and 4 show, on a larger scale, the plug of figure 2 in two alternative embodiments.

In figure 3 is shown an expandable sleeve body 11 whose external diameter is substantially complementary to the internal diameter of the tubular body 3. Draining of fluid which is flowing into the tubular body 3 through the bores 9, must be led on through the expandable sleeve body 11 and further out through the first end portion of the plug 1. Therefore, the expandable body 11 is provided with penetrating cut-outs 15 indicated in dashed lines.

In figure 4 is shown an alternative embodiment of the tubular body of figure 3. On the internal mantle surface of the tubular body 3 are placed three spacer mouldings 17 extending substantially parallel to each other between the first end portion 5 and second end portion 7 of the tubular body 3. The purpose of the spacer mouldings 17 is to provide an annular space 19 between the internal mantle surface of the tubular body 3 and the external mantle surface of the expandable body 11. Fluid flowing in through the bores 9 of the tubular body 3 will be drained via the annular space 19 and out through the first end portion of the plug 1. Thus, in this alternative embodiment there is no need for the cut-outs 15 mentioned above and indicated in figure 3. It will be understood that the annular space 19 could be provided by means of another number and other types of spacer elements than those shown. For example, the spacer mouldings 17 may be replaced completely or partially by lugs which could place the expandable sleeve element 11 substantially centred in the tubular body 3, or in any other desired position in a plug body of any other design.

When draining through an annular space 19 between the tubular body 3 and the expandable body 11, the expandable body 11 could be formed solid instead of as a sleeve. Fluid contacting a portion of the expandable body 11 projecting beyond the tubular body 3 may be led on the surface of the expandable body 11 and down through said annular space 19.

In one embodiment (not shown) the spacer mouldings or lugs, referred to in what follows as spacer elements, are formed as barbs. In the situation of use the barbs allow only one-way relative movement of the expandable element 11 relative to the tubular body 3 of the plug 1. If, in the position of use, the barbs point at an upward angle in the plug, from the first end portion 5 towards the second end portion 7 that is, the expandable body 11 could be moved in the direction from the first end portion 5 of the plug 1 towards the second end portion 7 of the plug, but not reversely. This could be an extra protection against uncontrolled sliding of the expandable body 11 out of the tubular body 3 of the plug 1 in the position of use.

By thermal influence above a predetermined temperature the expandable sleeve 11 of figure 3 will expand substantially inwards towards the centre of the sleeve 11, thus providing a seal between the first portion 5 and second portion 7 of the plug 1. In figure 4 the expandable sleeve 11 will expand both outwards until the annular space 19 is sealed, and inwards towards the centre of the sleeve 11 until the free space is fully sealed, thus providing a seal between the first portion 5 and second portion 7 of the plug.

Figure 5 shows, partly in section, the plug 1 in a position of use, in which it has been inserted through a cut-out in an outer mantle 21, further through an outer layer of a first type of insulation 23 and a distance into an inner layer of a second type of insulation 25 surrounding a pipe 27. The plug 1 is attached to a portion of the outer mantle 21 by the mantle'21 being clamped between the flange 5 and fasteners in the form of two so-called pop rivets 6 which have been passed through two bores 5' in the flange 4. It will be understood that other securing methods and/or other fasteners could be utilized. Condensation which may form at the pipe 27 or in one of the two layers of insulation 23, 25 shown, will be drained out through one or more of the perforations or cut-outs 9, 13 and further out through the first end portion 5 of the plug 1. Thus, any condensation developing even on the external mantle surface of the pipe 27, could be drained at least through the cut-outs 13 of the expandable sleeve 11 and out through the first end portion of the plug 1. When the prior art nipple mentioned above is used, any condensation forming at the pipe 27 would migrate through both layers of insulation 23, 25 before being drained out through said known nipple.

A person skilled in the art will understand that the tubular body 3 of the plug 1 could be made of any fire-resistant material, such as, but not limited to, metal. In one embodiment the plug 1 is made of a metal, such as a SS316 grade metal.

The expandable element 11 could be made of any suitable material. One such material which is suitable as a fire-insulating material used in the present invention is a material sold under the designation "Rise-sleeve" which is produced by Beele Engineering B.V. in the Netherlands. The "Rise-sleeve" expands by ten times its own volume when exposed to temperatures above 200 °C.

When the plug 1 is being fitted, a cut-out is provided in the mantle 21 before or after this has been fitted round the insulation 23. Then, at least portions but preferably all the insulation 23, 25 is removed between the cut-out of the mantle 21 and the equipment 27 which is insulated. The insulation 23, 25 is preferably removed to an extent substantially corresponding to the external dimension of the tubular body 3 of the plug 1. Whenever there is a need or a requirement for the plug 1 to be provided with an expandable element 11, this is inserted into the plug 1 in such a way that the expandable element is preferably brought to bear on the equipment 27. Thus, the expandable body 11 is arranged to be movable inside the tubular body 3 in such a manner that said tubular body 3 and the expandable element 11 together form a telescopic element. This provides a possibility for the tubular body 3 to be manufactured in one or a small number of standard length(s), and for fine adjustment to the equipment to be carried out by means of movement of the expandable element 11 in the tubular element. Such an adjustment is preferably carried out before the tubular body 3 of the plug 1 is inserted into the insulation 23, 25, but could also be carried out after the tubular body 3 has been inserted into the insulation. When necessary, cut-outs 15 are provided in the expandable element 11, substantially corresponding to the cut-outs 9 in the tubular body 3 of the plug 1. The first end portion 5 of the plug 1 is attached to a portion of the mantle 21 by means of fasteners 6.

Thus, the present invention provides a novel and unique plug which may lead condensed fluid away from insulation enclosing a piece of equipment, while at the same time the plug is arranged to be provided with a thermally expanding material protecting the insulated equipment from, for example, a fire.

## Claims

1. A plug (1) adapted to drain a fluid away from at least one layer of insulating material (23, 25) encased between an equipment (27) and an outer mantle (21), the plug (1) being adapted to extend through a bore in a portion of the outer mantle (21) and into a bore in each one of the at least one layer of insulating material (23, 25), the plug (1) comprising:
a tubular body defined by a first end portion (5) and a second end portion (7);
a draining means (9) adapted to drain fluid from the at least one layer of insulating material (23, 25) and/or equipment (27) and out through the first end portion (5) of the plug (1), **characterized in that** the plug (1) further comprising an expandable heat insulating element (11) arranged within a portion of the tubular body (3) and adapted to expand under the influence of heat at a predetermined temperature from an unexpanded state allowing for fluid communication between the first end portion (5) and the second end portion (7), to an expanded state for providing a seal between the first end portion (5) and the second end portion (7) of the plug (1).

2. The plug (1) in accordance with claim 1, **characterized in that** prior to expansion the expandable element (11) is arranged to be moved within the tubular body (3), whereby the longitudinal extent of the plug (1) is adjustable.

3. The plug (1) in accordance with claim 1, **characterized in that** the draining means is constituted by at least one perforation (9) in the tubular body (3).

4. The plug (1) in accordance with claim 3, **characterized in that** the expandable element (11) is formed of a sleeve-shaped body which is provided with at least one bore (15) which is substantially aligned with the at least one perforation (9) of the tubular body (3).

5. The plug (1) in accordance with any one of claims 1-3, **characterized in that** the tubular body (3) is provided with at least one spacer element (17) arranged to provide a space (19) between an internal mantle surface of the tubular body (3) and the external surface of the expandable element (11), whereby fluid may be drained out through the first end portion (5) of the plug (1) via the annular space (19).

6. The plug (1) in accordance with any one of the preceding claims, **characterized in that** the tubular body (3) is constituted by a fire-resistant material.

7. A method of draining a fluid away from at least one layer of insulating material (23, 25) which is substantially enclosed between a piece of equipment (27) and an outer mantle (21), the insulating material (23, 25) being arranged to protect the equipment (27) from harmful thermal influence of, for example, an external fire, wherein a plug (1) which is formed of a tubular body (3) with a first end portion (5) and a second end portion (7), extends through a bore in a portion of the outer mantle (21) into a bore in each one of the at least one layer of insulating material (23, 25), and at least one portion of the plug (1) is provided with a draining means (9, 15) which is arranged to drain fluid from the at least one layer of insulating material (23, 25) and out through the first end portion (5) of the plug (1), **characterized in that** an expandable element (11) is placed in a portion of the tubular body (3) of the plug (1), the expandable element (11) being arranged to expand under the influence of heat at a predetermined temperature, whereby thermal conduction through the tubular body (3) of the plug (1) is reduced.

8. The method according to claim 7, **characterized in that** the draining means is constituted by at least one perforation (9) in the tubular body.

9. The method according to claim 7, **characterized in that** the expandable body (11) is provided with at least one perforation (15) which is substantially aligned with the at least one perforation (9) of the tubular body (3).

10. The method according to claim 7, **characterized in that** the longitudinal extent of the plug (1) is adjusted by moving the expandable element (11) inside the tubular body (3).

11. The method according to any one of claims 7-10, **characterized in that** the tubular body (3) is constituted by a fire-resistant material.

## Patentansprüche

1. Einen Stopfen (1) zum Abfliessen einer Flüssigkeit von mindestens einer Schicht von Isolationsmaterial (23, 25), welches zwischen einer Ausrüstung (27) und einer äusseren Hülle (21) eingeschlossen ist, wobei der Stopfen (1) dazu geeignet ist, sich durch eine Bohrung in einem Bereich der äusseren Hülle (21) und in eine Bohrung in jeder einzelnen der mindestens einen Schicht von Isolationsmaterial (23, 25) hinein zu erstrecken, wobei der Stopfen (1) aufweist:
einen Rohrkörper, welcher durch einen ersten Endbereich (5) und einen zweiten Endbereich (7) definiert ist;
Abfliessmittel (9) zum Abfliessen von Flüssigkeit von der mindestens einen Schicht von Isolationsmaterial (23, 25) und / oder Ausrüstung (27) und durch den ersten Endbereich (5) des Stopfens (1) hinaus, **dadurch gekennzeichnet, dass** der Stopfen (1) weiter ein ausdehnbares Wärmeisolationselement (11) aufweist, welches innerhalb eines Bereichs des Rohrkörpers (3) angeordnet ist und dazu geeignet ist, sich unter dem Einfluss von Wärme bei einer vorbestimmten Temperatur von einem unausgedehnten Zustand, wo eine Fluidverbindung zwischen dem ersten Endbereich (5) und dem zweiten Endbereich (7) ermöglicht ist, in einen ausgedehnten Zustand auszudehnen, um eine Dichtung zwischen dem ersten Endbereich (5) und dem zweiten Endbereich (7) des Stopfens (1) bereitzustellen.

2. Der Stopfen (1) gemäss Anspruch 1, **dadurch gekennzeichnet, dass** das ausdehnbare Element (11) vor einer Ausdehnung bewegbar innerhalb des Rohrkörpers (3) angeordnet ist, wobei die Längsausdehnung des Stopfens (1) einstellbar ist.

3. Der Stopfen (1) gemäss Anspruch 1, **dadurch gekennzeichnet, dass** das Abfliessmittel durch mindestens eine Perforation (9) im Rohrkörper (3) gebildet ist.

4. Der Stopfen (1) gemäss Anspruch 3, **dadurch gekennzeichnet, dass** das ausdehnbare Element (11) aus einem hülsenförmigen Körper geformt ist, welcher mit mindestens einer Bohrung (15) versehen ist, welche im Wesentlichen mit der mindestens einen Perforation (9) des Rohrkörpers (3) ausgerichtet ist.

5. Der Stopfen (1) gemäss einem der Ansprüche 1-3, **dadurch gekennzeichnet, dass** der Rohrkörper (3) mit mindestens einem Abstandselement (17) versehen ist, welches derart angeordnet ist, dass ein Zwischenraum (19) zwischen einer inneren Hüllenfläche des Rohrkörpers (3) und der äusseren Fläche des ausdehnbaren Elements (11) bereitgestellt ist, wobei Flüssigkeit durch den ersten Endbereich (5) des Stopfens (1) via den ringförmigen Zwischenraum (19) hinaus abfliessen kann.

6. Der Stopfen (1) gemäss einem der vorhergehenden Ansprüche, **dadurch gekennzeichnet, dass** der Rohrkörper (3) aus einem feuerfesten Material gebildet ist.

7. Ein Verfahren zum Abfliessen einer Flüssigkeit von mindestens einer Schicht von Isolationsmaterial (23, 25), welches im Wesentlichen zwischen einem Ausrüstungsgegenstand (27) und einer äusseren Hülle (21) eingeschlossen ist, wobei das Isolationsmaterial (23, 25) derart angeordnet ist, dass die Ausrüstung (27) von schädlichem thermischen Einfluss von, zum Beispiel, einem äusseren Brand, geschützt ist, wobei ein Stopfen (1), welcher von einem Rohrkörper (3) mit einem ersten Endbereich (5) und einem zweiten Endbereich (7) gebildet ist, sich durch eine Bohrung in einem Bereich der äusseren Hülle (21) in eine Bohrung in jeder einzelnen der mindestens einen Schicht von Isolationsmaterial (23, 25) hindurch erstreckt, und mindestens ein Bereich des Stopfens (1) mit einem Abfliessmittel (9, 15) versehen ist, welches derart angeordnet ist, dass Flüssigkeit von der mindestens einen Schicht von Isolationsmaterial (23, 25) und durch den ersten Endbereich (5) des Stopfens (1) hindurch abfliesst, **dadurch gekennzeichnet, dass** ein ausdehnbares Element (11) in einen Bereich des Rohrkörpers (3) des Stopfens (1) platziert ist, wobei das ausdehnbare Element (11) derart angeordnet ist, dass es sich unter dem Einfluss von Wärme bei einer vorgegebenen Temperatur ausdehnt, wodurch die Wärmeleitung durch den Rohrkörper (3) des Stopfens (1) reduziert ist.

8. Das Verfahren gemäss Anspruch 7, **dadurch gekennzeichnet, dass** das Abfliessmittel durch mindestens eine Perforation (9) im Rohrkörper gebildet ist.

9. Das Verfahren gemäss Anspruch 7, **dadurch gekennzeichnet, dass** der ausdehnbare Körper (11) mit mindestens einer Perforation (15) versehen ist, welche im Wesentlichen mit der mindestens einen Perforation (9) des Rohrkörpers (3) ausgerichtet ist.

10. Das Verfahren gemäss Anspruch 7, **dadurch gekennzeichnet, dass** die Längsausdehnung des Stopfens (1) durch Verschieben des ausdehnbaren Elements (11) innerhalb des Rohrkörpers (3) eingestellt wird.

11. Das Verfahren gemäss einem der Ansprüche 7-10, **dadurch gekennzeichnet, dass** der Rohrkörper (3) aus einem feuerfesten Material gebildet ist.

## Revendications

1. Un bouchon (1) adapté pour drainer un fluide d'au moins une couche de matériau isolant (23, 25) enveloppé entre un équipement (27) et une enveloppe externe (21), le bouchon (1) étant adapté pour s'étendre à travers un alésage dans une partie de l'enveloppe externe (21) et dans un alésage dans chacune de ladite ou desdites au moins une couche de matériau isolant (23, 25), le bouchon (1) comprenant:
un corps tubulaire (3) défini par une première partie d'extrémité (5) et une seconde partie d'extrémité (7),
un moyen de drainage (9) adapté pour drainer un fluide de ladite ou desdites au moins une couche de matériau isolant (23, 25) et/ou de l'équipement (27) et dehors à travers la première partie d'extrémité (5) du bouchon (1), **caractérisé en ce que** le bouchon (1) comprend d'avantage un élément extensible à isolation thermique (11) arrangé dans une partie du corps tubulaire (3) et adapté pour se dilater sous l'influence de chaleur à une température prédéterminée, à partir d'un état non-dilaté permettant la communication fluide entre la première partie d'extrémité (5) et la seconde partie d'extrémité (7), vers un état dilaté pour fournir un joint entre la première partie d'extrémité (5) et la seconde partie d'extrémité (7) du bouchon (1).

2. Le bouchon (1) selon la revendication 1, **caractérisé en ce que** antérieurement à la dilatation, l'élément extensible (11) est arrangé pour être déplacé dans le corps tubulaire (3), rendant ainsi l'étendue longitudinale du bouchon (1) ajustable.

3. Le bouchon (1) selon la revendication 1, **caractérisé en ce que** le moyen de drainage est constitué par au moins une perforation (9) dans le corps tubulaire (3).

4. Le bouchon (1) selon la revendication 3, **caractérisé en ce que** l'élément extensible (11) est formé d'un corps en forme de gaine pourvue d'au moins un alésage aligné substantiellement avec l'au moins une perforation (9) du corps tubulaire.

5. Le bouchon (1) selon l'une quelconque des revendications 1 à 3, **caractérisé en ce que** le corps tubulaire (3) est pourvu d'au moins un élément d'écartement (17) arrangé pour fournir un espace (19) entre une surface interne de l'enveloppe du corps tubulaire (3) et la surface externe de l'élément extensible (11), par le biais duquel un fluide peut être drainé dehors à travers la première partie d'extrémité (5) du bouchon (1) via un espace annulaire (19).

6. Le bouchon (1) selon l'une quelconque des revendications précédentes, **caractérisé en ce que** le corps tubulaire est constitué d'un matériau résistant au feu.

7. Une méthode pour drainer un fluide d'une au moins une couche de matériau isolant (23,25) qui est substantiellement enveloppée entre une pièce d'équipement (27) et une enveloppe externe (21), le matériau isolant (23,25) étant arrangé pour protéger l'équipement (27) d'influence thermique nocive de, par exemple, au feu externe, dans laquelle un bouchon (1) est formé à partir d'un corps tubulaire (3) ayant une première partie d'extrémité (5) et une seconde partie d'extrémité (7), s'étendant à travers un alésage dans une partie de l'enveloppe externe (21), dans un alésage dans chacune de ladite ou desdites au moins une couche de matériau isolant (23,25), et au moins une partie du bouchon (1) est pourvue d'un moyen de drainage (9,15) qui est arrangé pour drainer un fluide de ladite ou desdites au moins une couche de matériau isolant (23,25) et dehors à travers de la première partie d'extrémité (5) du bouchon (1), **caractérisée en ce que** une élément extensible (11) est placé dans une partie du corps tubulaire (3) du bouchon (1), l'élément extensible (11) étant arrangé pour se dilater sous l'influence de chaleur à une température prédéterminée, ainsi réduisant la conduction thermique à travers le corps tubulaire (3) du bouchon (1).

8. La méthode selon la revendication 7, **caractérisée en ce que** le moyen de drainage est constitué par au moins une perforation (9) dans le corps tubulaire.

9. La méthode selon la revendication 7, **caractérisée en ce que** le corps extensible (11) est pourvu d'au moins une perforation (15) qui est substantiellement alignée avec au moins une perforation (9) du corps tubulaire (3).

10. La méthode selon la revendication 7, **caractérisée en ce que** l'étendue longitudinale du bouchon (1) est ajustée en déplaçant l'élément extensible (11) dans le corps tubulaire (3).

11. La méthode selon l'une quelconque des revendications 7 à 10, **caractérisée en ce que** le corps tubulaire (3) est constitué d'un matériau résistant au feu.
